(19) Europäisches Patentamt
European Patent Office
Office européen des brevets

(11) Veröffentlichungsnummer : **0 153 639**
**B1**

(12) # EUROPÄISCHE PATENTSCHRIFT

(45) Veröffentlichungstag der Patentschrift : **17.05.89**

(51) Int. Cl.$^4$ : **C 08 G 18/66**, C 08 K 5/09, B 29 C 33/60

(21) Anmeldenummer : **85101406.8**

(22) Anmeldetag : **09.02.85**

(54) **Verfahren zur Herstellung von zelligen oder kompakten Polyurethan-Polyharnstoff-Formkörpern mit verbesserten Entformungseigenschaften sowie innere Formtrennmittel für das Polyisocyanat-Polyadditionsverfahren.**

(30) Priorität : **18.02.84 DE 3405875**

(43) Veröffentlichungstag der Anmeldung : **04.09.85 Patentblatt 85/36**

(45) Bekanntmachung des Hinweises auf die Patenterteilung : **17.05.89 Patentblatt 89/20**

(84) Benannte Vertragsstaaten : **BE DE FR GB IT NL SE**

(56) Entgegenhaltungen :
**EP-A- 0 081 701**
**DE-A- 1 953 637**
**US-A- 4 374 222**
**US-A- 4 487 912**

(73) Patentinhaber : **BASF Aktiengesellschaft**
**Carl-Bosch-Strasse 38**
**D-6700 Ludwigshafen (DE)**

(72) Erfinder : **Werner, Frank, Dr.**
**Erschigweg 9**
**D-6730 Neustadt (DE)**
Erfinder : **Marx, Matthias, Dr.**
**Seebacher Strasse 49**
**D-6702 Bad Duerkheim (DE)**
Erfinder : **Schmidt, Hans Ulrich**
**Wredestrasse 53**
**D-6700 Ludwigshafen (DE)**

**EP 0 153 639 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Herstellung von zellhaltigen oder kompakten, elastischen Formkörpern mit einer geschlossenen Oberflächenschicht aus Polyurethan-Polyharnstoff-Elastomeren nach der bekannten Reaktionsspritzgußtechnik in geschlossenen Formwerkzeugen ist Gegenstand zahlreicher Literatur- und Patentpublikationen. Beispielhaft verweisen möchten wir auf die DE-OS 26 22 951 (US 4 218 543), in der Polyurethansysteme, die im wesentlichen aus organischen Polyisocyanaten, Polyolen, reaktiven aromatischen Di- bzw. Polyaminen, die in ortho-Stellung zu den Aminogruppen durch Alkylgruppen substituiert sind und starken Katalysatoren für die Reaktion zwischen Hydroxyl- und Isocyanatgruppen bestehen, beschrieben werden. Obgleich die äußerst schnelle Reaktion zwischen den genannten Aufbaukomponenten angeblich die Anwendung von Trennmitteln für die Entformung der Formteile aus polierten Metallwerkzeugen überflüssig macht, wird auf die zusätzliche Verwendung von bekannten Trennmitteln auf Wachs- oder Silikonbasis sowie von inneren Trennmitteln, wie sie aus der DE-AS 19 53 637 (US 3 726 952) und der DE-AS 21 21 670 (GB 1 365 215) bekannt sind, hingewiesen.

Als derartige Trennmittel werden in der DE-AS 19 53 637 mindestens 25 aliphatische Kohlenstoffatome aufweisende Salze von aliphatischen Mono- oder Polycarbonsäuren und primären Mono-, Di- oder Polyaminen mit zwei oder mehr Kohlenstoffatomen oder Amid- oder Estergruppen aufweisenden Aminen, die mindestens eine primäre, sekundäre oder tertiäre Aminogruppe besitzen, genannt. Nach Angaben der DE-AS 21 21 670 wird hingegen eine Mischung aus mindestens zwei Verbindungen aus der Gruppe der Amin-Carbonsäure-Salze gemäß DE-AS 19 53 637, der gesättigten und ungesättigten COOH— und/oder OH-Gruppen aufweisenden Ester von Mono- und/oder Polycarbonsäuren und mehrwertigen Alkoholen oder der natürlichen und/oder synthetischen Öle, Fette oder Wachse als Trennmittel verwendet. Aber selbst die Mitverwendung dieser Formtrennmittel führt bei den primäre aromatische Diamine enthaltenden Formulierungen zur Herstellung von Polyurethan-Polyharnstoff-Formkörpern nach der Reaktionsspritzgußtechnik im allgemeinen bestenfalls zu einer geringfügigen Verbesserung der selbsttrennenden Eigenschaften. Bei Verwendung von saure Gruppen, insbesondere Carboxylgruppen, aufweisenden Trennmitteln, ist außerdem nachteilig, daß die Katalyse der hochreaktiven Formulierungen gestört wird und dadurch Formteile ohne Anfangsfestigkeit gebildet werden.

Zur Vermeidung dieses Nachteils werden nach Angaben der EP-OS 81 701 (AU 82/90150) anstelle von hochmolekularen Polyhydroxylverbindungen Polyether verwendet, deren gegenüber Polyisocyanaten reaktive Gruppen zumindest zu 50 % aus primären und/oder sekundären Aminogruppen bestehen. Auf diese Weise kann man auf die Anwendung externer Trennmittel verzichten. Durch den Einsatz von kostspieligen Polyether-polyaminen werden jedoch nicht nur die erhaltenen Formkörper teurer, sondern auch deren Verwendbarkeit aufgrund der veränderten mechanischen Eigenschaften auf spezielle Anwendungsgebiete beschränkt.

Aus der US-A-4 374 222 ist der Einsatz von N-Hydroxyalkyl Carbonsäureamiden als innere Trennmittel in RIM-Rezepturen bekannt.

Die Aufgabe der vorliegenden Erfindung bestand darin, innere Trennmittel zu entwickeln, die die obengenannten Nachteile nicht aufweisen, im Hinblick auf die eingesetzten höhermolekularen Verbindungen vielfältig verwendbar sind und zu einer wesentlichen Verbesserung der selbsttrennenden Eigenschaften bei der Formkörperherstellung führen.

Diese Aufgabe konnte überraschenderweise gelöst werden durch die Verwendung von Carbonsäureestern und/oder Carbonsäureamiden, die als wesentlichen Bestandteil den Montansäurerest gebunden enthalten.

Gegenstand der Erfindung ist somit ein Verfahren zur Herstellung von zellhaltigen oder kompakten Polyurethan-Polyharnstoff-Formkörpern mit verbesserten Entformungseigenschaften durch Umsetzung von

a) organischen Polyisocyanaten,
b) höhermolekularen Verbindungen mit mindestens zwei reaktiven Wasserstoffatomen,
c) aromatischen Diaminen und gegebenenfalls
d) weiteren Kettenverlängerungsmitteln und/oder Vernetzern in Gegenwart von
e) inneren Formtrennmitteln,
f) Katalysatoren und gegebenenfalls
g) Treibmitteln,
h) Hilfsmitteln und/oder Zusatzstoffen

als one shot-Systeme nach der Reaktionsspritzgußtechnik in geschlossenen Formwerkzeugen, das dadurch gekennzeichnet ist, daß man als innere Formtrennmittel Carbonsäureester und/oder Carbonsäureamide, hergestellt durch Veresterung oder Amidierung einer Mischung aus Montansäure und mindestens einer aliphatischen Carbonsäure mit mindestens 10 Kohlenstoffatomen mit mindestens difunktionellen Alkanolaminen, Polyolen und/oder Polyaminen mit Molekulargewichten von 60 bis 400, verwendet.

Gegenstand der Erfindung sind ferner innere Formtrennmittel zur Herstellung von Formkörpern nach

dem Polyisocyanat-Polyadditionsverfahren in offenen oder geschlossenen Formwerkzeugen, die bestehen aus tertiären Aminogruppen gebunden enthaltenden Carbonsäureestern und/oder Carbonsäureamiden und hergestellt werden durch Veresterung oder Amidierung einer Mischung aus Montansäure und mindestens einer aliphatischen Carbonsäure mit mindestens 10 Kohlenstoffatomen mit einem Montansäuregehalt von 5 bis 95 Gew.%, bezogen auf das Gesamtgewicht der Carbonsäuremischung, mit tertiären Aminogruppen gebunden enthaltenden mindestens difunktionellen Alkanolaminen und/oder Polyaminen.

Da weder die bekannten Trennmittel noch die bisher bekannten Kombinationen daraus eine ausreichende Trennwirkung ergaben, konnte nicht erwartet werden, daß Montansäurereste enthaltende Mischester, Estergemische, gemischte Amide und/oder Amidgemische, die nach üblichen Methoden unter Verwendung einer Carbonsäuremischung aus Montansäure und aliphatischen Carbonsäuren mit mindestens 10 Kohlenstoffatomen hergestellt werden, diese vorzügliche Trennwirkung bei der Formkörperherstellung auf Basis der Polyisocyanat-Polyadditionsreaktion zeigen. Vorzugsweise Anwendung finden Carbonsäureamide und/oder insbesondere Carbonsäureester, die tertiäre Aminogruppen gebunden enthalten, da diese nicht zum Ausschwitzen neigen und auch bei anderen Polyisocyanat-Polyadditionsreaktionen, wie z. B. bei der Formkörperherstellung auf Polyurethan-, Polyisocyanurat- oder Polycarbodiimidbasis einer sehr gute Trennwirkung zeigen. Erwähnenswert ist ferner, daß die Lackierbarkeit der Formteile durch den Zusatz der erfindungsgemäß verwendbaren Trennmittel nicht erschwert oder gar unmöglich gemacht wird.

Zu den für das erfindungsgemäße Verfahren verwendbaren Aufbaukomponenten (a) bis (c), (e) und (f) sowie gegebenenfalls (d), (g) und (h) und den Ausgangsstoffen zur Herstellung der inneren Formtrennmittel ist folgendes auszuführen :

Als organische Polyisocyanate (a) kommen aliphatische, cycloaliphatische, araliphatische und vorzugsweise aromatische mehrwertige Isocyanate in Frage. Im einzelnen seien beispielhaft genannt : Alkylendiisocyanate mit 4 bis 12 Kohlenstoffatomen im Alkylenrest, wie 1,12-Dodecan-diisocyanat, Tetramethylen-diisocyanat-1,4 und vorzugsweise Hexamethylen-diisocyanat-1,6 ; cycloaliphatische Diisocyanate, wie Cyclohexan-1,3- und 1,4-diisocyanat sowie beliebige Gemische dieser Isomeren, 1-Isocyanato-3,3,5-trimethyl-5-isocyanatomethyl-cyclohexan (Isophoron-diisocyanat-, 2,4- und 2,6-Hexahydrotoluylen-diisocyanat sowie die entsprechenden Isomerengemische, 4,4'-, 2,2'- und 2,4'-Dicyclohexylmethandiisocyanat soxie die entsprechenden Isomerengemische und vorzugsweise aromatische Di- und Polyisocyanate, wie 4,4'-, 2,4'-, und 2,2'-Diisocyanato-diphenylmethan und die entsprechenden Isomerengemische, 2,4- und 2,6-Diisocyanato-toluol und die entsprechenden Isomerengemische, 1,5-Diisocyanato-naphthalin, Polyphenylpolymethylen-polyisocyanate, 2,4,6-Triisocyanato-toluol und vorzugsweise Gemische aus Diphenylmethan-diisocyanaten und Polyphenyl-polymethylenpolyisocyanaten (Roh-MDI). Die genannten Di- und Polyisocyanate können einzeln oder in Form von Mischungen eingesetzt werden.

Häufig werden auch sogenannte modifizierte mehrwertige Isocyanate, d. h. Produkte, die durch chemische Umsetzung obiger Di- und/oder Polyisocyanate erhalten werden, verwendet. Als modifizierte organische Di- und Polyisocyanate kommen beispielsweise in Betracht : Carbodiimidgruppen aufweisende Polyisocyanate gemäß DE-PS 10 92 007, Allophanatgruppen aufweisende Polyisocyanate, wie sie z. B. in der britischen Patentschrift 994 890, den ausgelegten Unterlagen des belgischen Patents 761 626 und der NL-OS 71 02 524 beschrieben werden, Isocyanuratgruppen aufweisende Polyisocyanate, wie sie z. B. in den DE-PS 10 22 789, 12 22 067 und 10 27 394 sowie den DE-OS 19 29 034 und 20 04 048 beschrieben werden, Urethangruppen aufweisende Polyisocyanate, wie sie z. B. in den ausgelegten Unterlagen des belgischen Patents 752 261 oder der US-PS 3 394 164 beschrieben werden, acylierte Harnstoffgruppen aufweisende Polyisocyanate z. B. gemäß DE-PS 12 30 778, Biuretgruppen aufweisende Polyisocyanate z. B. gemäß DE-PS 11 01 394 und GB-PS 889 050 ; durch Telomerisationsreaktionen hergestellte Polyisocyanate z. B. entsprechend den ausgelegten Unterlagen des belgischen Patents 723 640, Estergruppen aufweisende Polyisocyanate, wie sie z. B. in der GB-PS 965 474 und 1 072 956, der US-PS 3 567 765 und der DE-PS 12 31 688 genannt werden.

Vorzugsweise kommen jedoch zur Anwendung : urethangruppenhaltige Polyisocyanate, beispielsweise mit niedermolekularen linearen oder verzweigten Alkandiolen, Dialkylenglykolen oder Polyoxyalkylenglykolen mit Molekulargewichten bis 3 000 auf Basis von Ethylenoxid, 1,2-Propylenoxid oder deren Gemischen modifiziertes 4,4'- und/oder 2,4'-Diphenylmethan-diisocyanat oder 2,4- und/oder 2,6-Toluylendiisocyanat, Carbodiimidgruppen und/oder Isocyanuratringe enthaltende Polyisocyanate, z. B. auf 4,4'-, 2,4'-Diphenylmethan-diisocyanat, 2,4- und/oder 2,6-Toluylen-diisocyanat-Basis und insbesondere 4,4'-Diphenylmethan-diisocyanat, Mischungen aus 2,4'- und 4,4'-Diphenylmethan-diisocyanat, Toluylen-diisocyanate, Mischungen aus Diphenylmethan-diisocyanaten und Polyphenyl-polymethylen-polyisocyanaten (Roh-MDI) und Gemische aus Toluylen-diisocyanaten und Roh-MDI.

Als höhermolekulare Verbindungen (b) mit mindestens zwei reaktiven Wasserstoffatomen werden zweckmäßigerweise solche mit einer Funktionalität von 2 bis 8, vorzugsweise 2 bis 4 und einem Molekulargewicht von 1 000 bis 8 000, vorzugsweise von 1 200 bis 6 000 verwendet. Bewährt haben sich z. B. Polyether-polyamine und/oder vorzugsweise Popyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.

Geeignete Polyester-polyole können beispielsweise aus organischen Dicarbonsäuren mit 2 bis 12

Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z. B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20-35 : 35-50 : 20-32 Gew.Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z. B. ε-Caprolacton, oder Hydroxycarbonsäuren, z. B. ω-Hydroxycapronsäure.

Die Polyester-polyole besitzen vorzugsweise eine Funktionalität von 2 bis 3 und ein Molekulargewicht von 1 000 bis 3 000 und vorzugsweise 1 800 bis 2 500.

Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u. a. oder Bleicherde als Katalysatoren aus einem oder mehreren Alkylenoxiden mit 2 bis 4 Kohlenstoffatomen im Alkylenrest und gegebenenfalls einem Startermolekül, das 2 bis 8, vorzugsweise 2 bis 4, reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan.

Als Startermoleküle kommen ferner in Betracht Alkanolamine, wie Ethanolamin, Diethanolamin, N-Methyl- und N-Ethyl-ethanolamin, N-Methyl- und N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Saccharose.

Die Polyether-polyole besitzen vorzugsweise eine Funktionalität von 2 bis 4 und Molekulargewichte von 1 000 bis 8 000, vorzugsweise 1 200 bis 6 000 und insbesondere 1 800 bis 4 000. Sie können ebenso wie die Polyesterpolyole einzeln oder in Form von Mischungen verwendet werden. Ferner können sie mit den Polyester-polyolen sowie den hydroxylgruppenhaltigen Polyesteramiden, Polyacetalen, Polycarbonaten und/oder Polyether-polyaminen gemischt werden.

Als hydroxylgruppenhaltige Polyacetale kommen z. B. die aus Glykolen, wie Diethylenglykol, Triethylenglykol, 4,4'-Di-(hydroxyethoxy)-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z. B. Diphenylcarbonat, oder Phosgen hergestellt werden können.

Zu den Polyesteramiden zählen z. B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Hydroxyl- und/oder Aminogruppen gebunden enthaltende Kondensate.

Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die Aminierung von Polyoxyalkylen-polyolen mit Aminen oder Ammoniak in Gegenwart von Wasserstoff und Katalysatoren (DE 12 15 373).

Als aromatische Diamine (c) werden beim erfindungsgemäßen Verfahren solche verwendet, deren primäre Aminogruppen gegenüber Polyisocyanaten durch mindestens einen orthoständigen Alkylsubstituenten zu jeder Aminogruppe sterisch behindert sind.

In Betracht kommen jedoch auch Mischungen aus

99,9 bis 50 Gew.%, vorzugsweise 78 bis 65 Gew.% mindestens eines der obengenannten, primären aromatischen Diamine (c), dessen Aminogruppen gegenüber Polyisocyanaten durch mindestens einen orthoständigen Alkylsubstituenten zu jeder Aminogruppe sterisch behindert sind und

0,1 bis 50 Gew.%, vorzugsweise 22 bis 35 Gew.% mindestens eines unsubstituierten oder substituierten primären aromatischen Diamins (ci), dessen Aminogruppen gegenüber Polyisocyanaten keine durch elektronenanziehende Substituenten und/oder sterische Hinderung verursachte verminderte Reaktivität zeigen, wobei die Gew.% bezogen sind auf das Gesamtgewicht der Mischung aus (c) und (ci).

Insbesondere geeignet sind primäre aromatische Diamine, die bei Raumtemperatur flüssig und mit der Komponente (b) unter den Verarbeitungsbedingungen ganz oder zumindest teilweise mischbar sind.

Als primäre aromatische Diamine (c) bewährt haben sich und daher vorzugsweise verwendet werden alkylsubstituierte meta-Phenylendiamine der Formeln

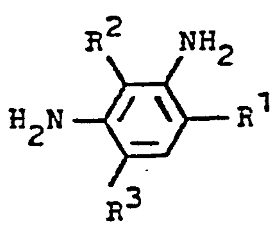

und/oder

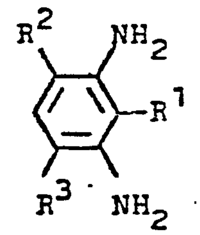

in denen $R^1$ ein Wasserstoffatom oder ein linearer oder verzweigter Alkylrest mit 1 bis 12 Kohlenstoffatomen, vorzugsweise 1 bis 6 Kohlenstoffatomen ist und $R^2$ und $R^3$ gleiche oder verschiedene, lineare oder verzweigte Alkylreste mit 1 bis 4 Kohlenstoffatomen, wie z. B. ein Methyl-, Ethyl-, Propyl-, Isopropyl-, Butyl- oder sek. Butylrest sind.

Geeignet sind insbesondere solche Alkylreste $R^1$, bei denen die Verzweigungsstelle am $C_1$-Kohlenstoffatom sitzt. Neben Wasserstoff seien als Alkylreste $R^1$ beispielhaft genannt: der Methyl-, Ethyl-, n- und iso-Propyl-, Butyl-, Hexyl-, Octyl-, Decyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propylrest.

Als alkylsubstituierte m-Phenylendiamine kommen beispielsweise in Betracht: 2,4-Dimethyl-, 2,4-Diethyl-, 2,4-Diisopropyl-, 2,4-Diethyl-6-methyl-, 2-Methyl-4,6-diethyl-, 2,4,6-Triethyl-, 2,4-Dimethyl-6-cyclohexyl, 2-Cyclohexyl-4,6-diethyl-, 2-Cyclohexyl-2,6-diisopropyl-, 2,4-Dimethyl-6-(1-ethyl-n-propyl)-, 2,4-Dimethyl-6-(1,1-dimethyl-n-propyl)- und 2-(1-Methyl-n-butyl)-4,6-dimethyl-phenylendiamin-1,3.

Bewährt haben sich ferner alkylsubstituierte Diamino-diphenylmethane, wie z. B. 3,3′-di- und 3,3′,5,5′-tetra-n-alkylsubstituierte 4,4′-Diamino-di-phenylmethane wie z. B. 3,3′-Diethyl-, 3,3′,5,5′-Tetraethyl- und 3,3′,5,5′-Tetra-n-propyl-4,4′-diamino-diphenylmethan.

Anwendung finden vorteilhafterweise Diamino-diphenylmethane der Formel

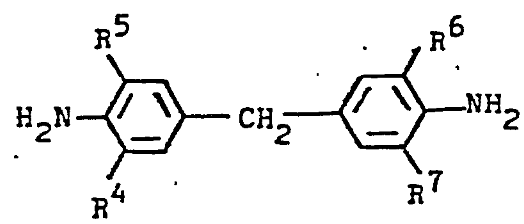

in der $R^4$, $R^5$, $R^6$ und $R^7$ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die alkylsubstituierten 4,4′-Diamino-diphenylmethane können auch im Gemisch mit Isomeren der Formeln

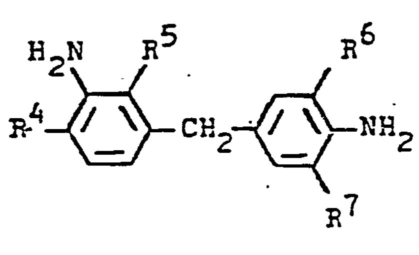

und/oder

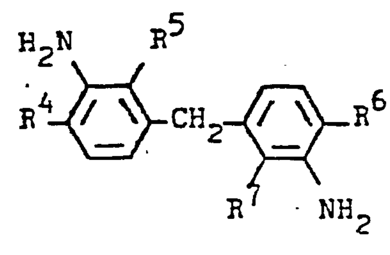

verwendet werden, wobei $R^4$, $R^5$, $R^6$ und $R^7$ die obengenannte Bedeutung haben.

Beispielhaft genannt seien: 3,3′,5-Trimethyl-5′-isopropyl-, 3,3′,5-Triethyl-5′-isopropyl-, 3,3,5′-Trimethyl-5'-sek.-butyl-, 3,3',5-Triethyl-5'-sek.-butyl-4,4'-diamino-diphenylmethan, 3,3'-Dimethyl-5,5'-diisopropyl-, 3,3'-Diethyl-5,5'-diisopropyl-, 3,3'-Dimethyl-5,5'-di-sek.-butyl-, 3,3'-Diethyl-5,5'-di-sek.-butyl-, 3,5-Dimethyl-3',5'-diisopropyl-, 3,5-Di-ethyl-3',5'-diisopropyl-, 3,5-Dimethyl-3',5'-di-sek.-butyl-, 3,5-Diethyl-3',5'-di-sek.-butyl-4,4'-diamino-diphenylmethan, 3-Methyl-3',5,5'-triisopropyl-, 3-Ethyl-3',5,5'-triisopropyl-, 3-Methyl-3',5,5'-tri-sek.-butyl-, 3-Ethyl-3',5,5'-tri-sek.-butyl-4,4'-diamino-diphenylmethan, 3,3'-Diisopropyl-5,5'-di-sek.-butyl-, 3,5-Diisopropyl-3',5'-di-sek.-butyl-, 3-Ethyl-5-sek.-butyl-3',5'-diisopropyl-, 3-Methyl-5-tert.-butyl-3',5'-diiso-propyl-, 3-Ethyl-5-sek.-butyl-3'-methyl-5'-tert.-butyl-, 3,3',5,5'-Tetraisopropyl- und 3,3',5,5'-Tetra-sek.-butyl-4,4'-diaminodiphenylmethan.

Vorzugsweise verwendet werden folgende primären aromatischen Diamine: 2,4-Diethyl, 2,4-Dimethyl-phenylendiamin-1,3, 2,4-Diethyl-6-methyl-, 2-Methyl-4,6-diethyl-phenylendiamin-1,3, 2,4,6-Triethyl-phenylendiamin-1,3, 2,4-Dimethyl-6-tert.-butyl-, 2,4-Dimethyl-6-isooctyl- und 2,4-Dimethyl-6-cyclohexyl-phenylendiamin-1,3 sowie 3,5-Dimethyl-3',5'-diisopropyl- und 3,3',5,5'-Tetraisopropyl-4,4'-diamino-diphenylmethan.

Die primären aromatischen Diamine können einzeln oder in Form von Mischungen, beispielsweise aus alkylsubstituierten 1,3-Phenylendiaminen, 3,3'-di- und/oder 3,3',5,5'-tetraalkylsubstituierten 4,4'-Diamino-diphenylmethanen eingesetzt werden. Außerdem können die primären aromatischen Diamine mit maximal 50 Gew.%, bezogen auf das Gesamtgewicht, primären alkylsubstituierten aromatischen Tri-bis Pentaminen, wie z. B. Polyphenylpolymethylen-polyaminen gemischt sein, wobei die aromatischen Polyamine mindestens in einer o-Stellung zu den Aminogruppen mit einem Alkylrest substituiert sind.

Als Diaminkomponente (ci) werden vorzugsweise unsubstituierte primäre aromatische Diamine verwendet. Geeignet sind jedoch auch substituierte primäre aromatische Diamine, zweckmäßigerweise monoalkylsubstituierte aromatische Diamine, bei denen die Reaktivität der Aminogruppen durch den Substituenten nicht negativ beeinflußt wird. Im einzelnen seien beispielhaft genannt: 1,2-, 1,3- und 1,4-Phenylendiamin, Benzidin, 4,4'- und 2,4'-Diaminodiphenylmethan, 4,4'-Diamino-diphenylether, 1,5-Diamino-naphthalin, 1,8-Diamino-naphthalin, 3,4-, 2,4- und 2,6-Toluylen-diamin. Die aromatischen Diamine (ci) können ebenso wie die aromatischen Diamine (c) einzeln oder in Form von Mischungen eingesetzt werden. Vorzugsweise Anwendung finden 2,4- und/oder 2,6-Toluylendiamin und insbesondere 1,3-Phenylen-diamin.

Als aromatische Diamine werden vorzugsweise Mischungen verwendet aus (c) 80 bis 50 Gew.-% 2,4-Dimethyl-6-tert.-butyl-phenylendiamin-1,3, 2,4-Diethyl-6-methyl- und/oder 2-Methyl-4,6-diethyl-phenylendiamin-1,3 und (ci) 20 bis 50 Gew.% 1,3-Phenylendiamin, wobei die Gew.% bezogen sind auf das Gesamtgewicht der Mischung aus den Komponenten (c) und (ci).

Die aromatischen Diamine (c) oder die Mischung aus den aromatischen Diaminen (c) und (ci) kommen beim erfindungsgemäßen Verfahren in Mengen von 5 bis 50 Gew.-Teilen, vorzugsweise 10 bis 40 Gew.-Teilen und insbesondere 15 bis 30 Gew.-Teilen, bezogen auf 100 Gew.-Teile der Komponente (b), zur Anwendung.

Gegebenenfalls kann es zweckmäßig sein, insbesondere bei der Herstellung von zellhaltigen Polyurethan-Polyharnstoff-Formkörpern, die Mischung aus primären aromatischen Diaminen (c) teilweise durch Kettenverlängerungsmittel und/oder Vernetzer (d) zu ersetzen. Die Kettenverlängerungsmittel oder Vernetzer besitzen vorteilhafterweise Molekulargewichte kleiner als 500, vorzugsweise von 30 bis 400 und weisen vorzugsweise zwei aktive Wasserstoffatome auf. In Betracht kommen beispielsweise aliphatische und/oder araliphatische Diole mit 2 bis 14, vorzugsweise 2 bis 6 Kohlenstoffatomen, wie Propandiol-1,3, Decandiol-1,10, Diethylenglykol, Dipropylenglykol, Bis-(2-hydroxyethyl)-hydrochinon und vorzugsweise Ethylenglykol, Butandiol-1,4 und Hexandiol-1,6, Triole, wie Glycerin und Trimethylolpropan, niedermolekulare Polyoxyalkylen-polyole auf Basis Ethylen- und/oder 1,2-Propylenoxid und den vorgenannten Startermolekülen und sek. aromatische Diamine, von denen beispielhaft genannt seien: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek.-pentyl-, N,N'-Di-sek.-hexyl-, N,N'-Di-sek.-decyl-, N,N'-Dicyclohexyl-p-bzw. -m-phenylendiamin, N,N'-Dimethyl-, N,N'-Diethyl-, N,N'-Diisopropyl-, N,N'-Di-sek.-butyl-, N,N'-Dicyclohexyl-4,4'-diamino-diphenylmethan und N,N'-Di-sek.-butyl-benzidin.

Die Kettenverlängerungsmittel und/oder Vernetzer (d) können einzeln oder in Form von Mischungen eingesetzt werden. Sofern Mischungen aus aromatischen Diaminen (c) und Kettenverlängerungsmittel und/oder Vernetzern (d) Anwendung finden, enthalten diese vorteilhafterweise pro 100 Gew.Teile aromatische Diamine (c) 1 bis 40, vorzugsweise 5 bis 20 Gew.Teile der Komponente (d).

Die erfindungsgemäß als innere Formtrennmittel (e) geeigneten Carbonsäure-amide und/oder vorzugsweise Carbonsäureester werden hergestellt durch Amidierung oder vorzugsweise Veresterung einer Mischung aus Montansäure und mindestens einer aliphatischen Carbonsäure mit mindestens 10 Kohlenstoffatomen, vorzugsweise 14 bis 25 Kohlenstoffatomen mit mindestens difunktionellen Polyaminen, Polyolen und/oder Alkanolaminen mit Molekulargewichten von 60 bis 400, vorzugsweise von 60 bis 200. In Betracht kommen insbesondere Carbonsäuremischungen aus Montansäure und mindestens einer aliphatischen Carbonsäure, die bezogen auf das Gesamtgewicht, 5 bis 95 Gew.%, vorzugsweise 20 bis 60 Gew.% Montansäure enthalten.

Geeignete Montansäuren besitzen Schmelzpunkte von 76 bis 87 °C, vorzugsweise von 76 bis 81 °C, Säurezahlen von 115 bis 155, vorzugsweise von 135 bis 150 und Verseifungszahlen von 140 bis 175,

vorzugsweise 155 bis 175. Montansäuren mit den genannten Eigenschaften sind beispielsweise unter dem Handelsnamen S-Wachs BASF bekannt.

Als aliphatische Carbonsäuren mit mindestens 10 Kohlenstoffatomen seien beispielhaft genannt : Stearinsäure, Palmitinsäure, Rizinolsäure, Linolsäure, Linolensäure, Behensäure, Talgfettsäure, Transfettsäure, Laurinsäure und vorzugsweise Tallölfettsäure und/oder Ölsäure.

Als Polyamine kommen primäre, sekundäre und tertiäre Amine mit einer Funktionalität von 2 bis 4 und einem Molekulargewicht von 60 bis 400, wie z. B. Ethylendiamin, 1,2- oder 1,3-Propylendiamin, 1,4-Butylendiamin, 1,6-Hexamethylendiamin, Neopentyldiamin, Dipropylentriamin, Diethylentriamin, 4,9-Dioxadodecan-1,12-diamin, N,N'-Bis-(3-aminopropyl)-ethylendiamin und vorzugsweise Tris-(aminoethyl)-amin, Tris-(3-aminopropyl)-amin, 1-(2-Aminoethyl)-piperazin und 1,4-Bis-(3-aminopropyl)-piperazin in Betracht.

Geeignete Polyole besitzen eine Funktionalität von 2 bis 6 und Molekulargewichte von 62 bis 400. Im einzelnen seien beispielhaft genannt : Ethylen-, Propylen-, Butylen-, Hexamethylen-glykol, Neopentylglykol, Glycerin, Trimethylolpropan, Pentaerythrit, Sorbit oder Additionsprodukte von einem oder mehreren Alkylenoxide an diese Alkohole oder Diamine, wie z. B. Anlagerungsprodukte von Ethylen- und/oder 1,2-Propylenoxide an Ethylen-, Propylenglykol, Glycerin, Trimethylolpropan oder Ethylendiamin.

Als Alkanolamine kommen solche mit einer Funktionalität von 2 bis 3 und Molekulargewichten von 61 bis 400 wie z. B. Ethanolamin, N-Methyl-, N-Butyl-, N-Neopentyl-, N-Cyclohexylethanolamin, N-Methylisopropanolamin, Diethanolamin, Dipropanolamin, N-Alkyl-dialkanolamine mit 1 bis 20 Kohlenstoffatomen im Alkylrest wie z. B. N-Methyl-, N-Butyl-, N-2-Ethylhexyl-, N-Cyclohexyl-, N-Dodecyl-diethanol- bzw. -diisopropanolamin, Hydroxyethyl-, 1,4-Dihydroxyethyl-, 1,4-Diisopropanol-piperazin, Tripropanolamin. Tributanolamin und vorzugsweise Triethanolamin und Triisopropanolamin in Frage.

Die Polyole, Polyamine und Alkanolamine können einzeln oder in Form von Mischungen eingesetzt werden. Besonders bewährt haben sich und daher vorzugsweise verwendet werden Polyamine und/oder insbesondere Alkanolamine, die neben mindestens 2 reaktiven funktionellen Gruppen noch mindestens eine tertiäre Aminogruppe gebunden enthalten.

Die erfindungsgemäß verwendbaren Formtrennmittel besitzen Molekulargewichte von 388 bis 1 790, vorzugsweise von 600 bis 1 300, Säurezahlen kleiner als 10, vorzugsweise kleiner 5 bis 0,5 und Amin- bzw. Hydroxylzahlen von 0 bis 100, vorzugsweise 0 bis 60 und werden vorzugsweise in Mengen von 0,1 bis 20 Gew.%, insbesondere 1 bis 10 Gew.%, bezogen auf das Gesamtgewicht der Aufbaukomponenten (a) bis (d) verwendet.

Die Herstellung der Carbonsäureamide und/oder vorzugsweise Carbonsäureester erfolgt am zweckmäßigsten durch Kondensation der Carbonsäuren und mindestens difunktionellen Polyole, Polyamine und/oder Alkanolamine bei Temperaturen über 100 °C, vorzugsweise bei 180 bis 220 °C, gegebenenfalls unter Vakuum, wobei die Wasserabspaltung bis zum Erreichen der gewünschten Säurezahl bzw. Hydroxyl- oder Aminzahlen oder dem gewünschten Durchschnittsmolekulargewicht durchgeführt wird.

Die Polykondensation kann auch in Gegenwart von sauren oder basischen Katalysatoren durchgeführt und das Wasser durch azeotrope Destillation abgetrennt werden.

Als Formtrennmittel haben sich insbesondere Carbonsäureester mit einem Molekulargewicht von 1 020 bis 1 230, einer Säurezahl von 0,5 bis 5 und einer Hydroxylzahl von 0 bis 60 bewährt, die durch Veresterung einer Mischung aus einem Mol Montansäure und zwei Molen Tallölfettsäure und/oder Ölsäure und einem Mol Triethanolamin und/oder Triisopropylamin hergestellt werden.

Als Katalysatoren (f) werden insbesondere Verbindungen verwendet, die die Reaktion der Hydroxylgruppen enthaltenden Verbindungen der Komponenten (b) und gegebenenfalls (d) mit den Polyisocyanaten stark beschleunigen. In Betracht kommen organische Metallverbindungen, vorzugsweise organische Zinnverbindungen, wie Zinn-(II)-salze von organischen Carbonsäuren, z. B. Zinn-(II)-acetat, Zinn-(II)-octoat, Zinn-(II)-ethylhexoat und Zinn-(II)-laurat und die Dialkylzinn-(IV)-salze von organischen Carbonsäuren, z. B. Dibutyl-zinndiacetat, Dibutylzinn-dilaurat, Dibutylzinnmaleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin. Pentamethyl-diethylentriamin, Tetramethyl-di-(aminoethyl)ether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolverbindungen, wie Triethanolamin, Triisopropanolamin, N-Methyl- und N-Ethyl-diethanolamin und Dimethylethanolamin.

Als Katalysatoren kommen ferner in Betracht : Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammonium-hydroxid, Alkalihydroxide, wie Natriumhydroxid and Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.%, insbesondere 0,05 bis 2 Gew.% Katalysator bzw. Katalysatorkombination, bezogen auf das Gewicht der Komponente (b).

Zu Treibmitteln (g), welche im erfindungsgemäßen Verfahren gegebenenfalls verwendet werden können, gehört Wasser, das mit Isocyanatgruppen unter Bildung von Kohlendioxid reagiert. Die

Wassermengen, die zweckmäßigerweise verwendet werden können, betragen 0,5 bis 2 Gew.%, bezogen auf das Gewicht der Komponente (b).

Andere verwendbare Treibmittel sind niedrigsiedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-2,2,2-trifluorethan.

Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen Polyurethan-Polyharnstoff-Formkörpern hängt ab von der Dichte, die man erreichen will sowie gegebenenfalls von der Mitverwendung von Wasser. Im allgemeinen liefern Mengen von 0,5 bis 15 Gew.Teilen, bezogen auf 100 Gew.Teile der Komponente (b) zufriedenstellende Ergebnisse.

Der Reaktionsmischung können gegebenenfalls auch noch Hilfsmittel und/oder Zusatzstoffe (h) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salzes von Fettsäuren mit Aminen, z. B. ölsaures Diethylamin oder stearinsaures Diethanolamin, Salze von Sulfonsäuren, z. B. Alkali- oder Ammoniumsalze von Dodecylbenzol- oder Dinaphthylmethandisulfonsäure und Ricinolsäure ; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile der Komponente (b), angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt : anorganische Füllstoffe wie silikatische Mineralien, beispielsweise Schichtsilikate wie Antigorit, Serpentin, Hornblenden, Amphibole, Chrisotil, Talkum ; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u. a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht : Kohle, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyetherolen analog den Angaben der deutschen Patentschriften 11 11 394, 12 22 669, (US 3 304 273, 3 383 351, 3 523 093), 11 52 536 (GB 1 040 452) und 11 52 537 (GB 987 618) hergestellt und danach gegebenenfalls aminiert werden sowie Filler-polyoxyalkylen-polyole oder -polyamine, bei denen wäßrige Polymerdispersionen in Polyoxyalkylen-polyol- oder -polyamindispersionen übergeführt werden.

Die anorganischen und organischen Füllstoffe können einzeln oder als Gemische verwendet werden. Vorzugsweise Anwendung finden stabile Füllstoff-Polyoxyalkylen-polyol-Dispersionen, bei denen die Füllstoffe in Gegenwart von Polyoxyalkylen-polyolen in situ mit hohen örtlichen Energiedichten auf eine Teilchengröße kleiner als 7 µm zerkleinert und hierbei gleichzeitig dispergiert werden.

Die anorganischen und organischen Füllstoffe werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt.

Geeignete Flammschutzmittel sind beispielsweise Trikresylphosphat, Tris-2-chlorethylphosphat, Tris-chlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat zum Flammfestmachen der Formkörper verwendet werden. Im allgemeinen hat es sich als zweckmäßig erwiesen, 5 bis 50 Gew.Teile, vorzugsweise 5 bis 25 Gew.Teile der genannten Flammschutzmittel für jeweils 100 Gew.Teile der Komponente (b) zu verwenden.

Nähere Angaben über die obengenannten anderen üblichen Hilfs- und Zusatzstoffe sind der Fachliteratur, beispielsweise der Monographie von J. H. Saunders und K. C. Frisch « High Polymers » Band XVI, Polyurethanes, Teil 1 und 2, Verlag Interscience Publishers 1962 bzw. 1964, zu entnehmen.

Zur Herstellung der gegebenenfalls zelligen Polyurethan-Polyharnstoff-Formkörper werden die organischen Polyisocyanate (a), höhermolekularen Verbindungen mit mindestens zwei reaktiven Wasserstoffatomen (b), aromatischen Diamine (c) und gegebenenfalls Kettenverlängerungsmittel und/oder Vernetzer (d) in solchen Mengen zur Umsetzung gebracht, daß das Äquivalenz-Verhältnis von NCO-Gruppen der Polyisocyanate (a) zur Summe der reaktiven Wasserstoffatome der Komponenten (b), (c) und gegebenenfalls (d) 1 : 0,85 bis 1,25, vorzugsweise 1 : 0,95 bis 1,15 beträgt.

Die Herstellung der zellhaltigen und vorzugsweise kompakten Polyurethan-Polyharnstoff-Formkörper erfolgt nach dem Prepolymer-Verfahren oder vorzugsweise nach dem one shot-Verfahren mit Hilfe der bekannten Reaktionsspritzguß-Technik. Diese Verfahrensweise wird beispielsweise beschrieben von Piechota und Röhr in « Integralschaumstoff », Carl-Hanser-Verlag, München, Wien 1975 ; D. J. Prepelka und J. L. Wharton in Journal of Cellular Plastics, März/April 1975, Seiten 87 bis 98 und U. Knipp in Journal of Cellular Plastics, März/April 1973, Seiten 76 bis 84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die primären aromatischen Diamine (c) und gegebenenfalls Kettenverlängerungsmittel und/oder Vernetzer (d) in den höhermolekularen Verbindungen mit mindestens zwei reaktiven Wasserstoffatomen (b) zu lösen und gegebenenfalls mit Treibmitteln, Hilfs- und Zusatzstoffen in der Komponente (A) zu vereinigen und als Komponente (B) die organischen Polyisocyanate, modifizierten Polyisocyanate und/oder NCO-Prepolymere zu verwenden. Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.

Die Menge des in das Formwerkzeug eingebrachten Reaktionsgemisches wird so bemessen, daß die erhaltenen kompakten Formkörper eine Dichte von 1,0 bis 1,4 $g/cm^3$, vorzugsweise von 1,0 bis 1,2 $g/cm^3$ und die zellhaltigen Formkörper eine Dichte von 0,8 bis 1,2 $g/cm^3$, vorzugsweise von 0,8 bis 1,0 $g/cm^3$ aufweisen. Die Ausgangskomponenten werden mit einer Temperatur von 15 bis 80 °C, vorzugsweise von 40 bis 55 °C in die Form eingebracht. Die Formwerkzeugtemperatur beträgt zweckmäßigerweise 20 bis 100 °C, vorzugsweise 30 bis 80 °C. Die Verdichtungsgrade zur Herstellung der mikrozellularen oder zellhaltigen Formkörper liegen zwischen 1,1 und 8, vorzugsweise zwischen 2 und 8.

Die nach dem erfindungsgemäßen Verfahren erhaltenen kompakten bzw. mikrozellularen Polyurethan-Polyharnstoff-Formkörper eignen sich insbesondere zur Verwendung in der Automobilindustrie, beispielsweise als Stoßstangenabdeckungen, Rammschutzleisten und Karosserieteile wie Regenrinnen, Kotflügel, Spoiler und Radkästenverbreiterungen sowie als technische Gehäuseteile, Laufrollen und Schuhsohlen. Die zellhaltigen Schaumstoffe finden beispielsweise als Armlehnen, Kopfstützen, Sicherheitsabdeckungen im Automobilinnenraum sowie als Motorrad- und Fahrradsättel und Deckschichten in Verbundschaumstoffen Anwendung.

Die in den Beispielen genannten Teile beziehen sich auf das Gewicht.

Herstellung der Formtrennmittel

Fettsäureester I :

582,8 Teile (2 Mol) Tallölfettsäure,
391,0 Teile (1 Mol) Montansäure und
191,3 Teile (1 Mol) Triisopropanolamin

wurden unter Rühren und einem Druck von 53,2 mbar 20 Stunden auf 210 °C erhitzt. Die erhaltenen Fettsäureester besaßen ein durchschnittliches Molekulargewicht von 1 111, eine Säurezahl von 1,4 und eine Hydroxylzahl von 25.

Fettsäureester II :

Man verfährt analog Fettsäureester I, verwendet jedoch als Ausgangsstoffe

565 Teile (2 Mol) Ölsäure,
391 Teile (1 Mol) Montansäure und
191,3 Teile (1 Mol) Triisopropanolamin.

Die erhaltenen Fettsäureester besaßen ein durchschnittliches Molekulargewicht von 1 093, eine Säurezahl von 1,7 und eine Hydroxylzahl von 43.

Fettsäureester III :

Man verfährt analog den Angaben von Fettsäureester I, verwendet jedoch als Ausgangsstoffe

582,8 Teile (2 Mol) Tallölfettsäure,
391 Teile (1 Mol) Montansäure und
149,2 Teile (1 Mol) Triethanolamin.

Die erhaltenen Fettsäureester besaßen ein durchschnittliches Molekulargewicht von 1 069, eine Säurezahl von 2,9 und eine Hydroxylzahl von 54.

Fettsäureester IV :

Man verfährt analog den Angaben von Fettsäureester I, verwendet jedoch als Ausgangsstoffe

582,8 Teile (2 Mol) Tallölfettsäure,
391 Teile (1 Mol) Montansäure und
134 Teile (1 Mol) Trimethylolpropan.

Die erhaltenen Fettsäureester besaßen ein durchschnittliches Molekulargewicht von 1 053, eine Säurezahl von 1,7 und eine Hydroxylzahl von 37.

## Beispiel 1

A-Komponente : Mischung aus

74,9 Teilen eines Polyoxypropylen-polyoxyethylen-triols mit einer Hydroxylzahl von 26, hergestellt durch Polyaddition von 1,2-Propylenoxid an Trimethylolpropan als Startermolekül und anschließende Addition von Ethylenoxid,
21,0 Teilen 2,4-Dimethyl-6-tertiär-butyl-phenylendiamin-1,3,
3,0 Teilen Fettsäureester I
1,0 Teilen 1,4-Diazabicyclo-(2,2,2)-octan in Dipropylenglykol (33 gew.%ige Lösung) und
0,1 Teilen Dibutylzinndilaurat.

B-Komponente :

Urethanmodifiziertes 4,4'-Diphenylmethan-diisocyanat mit einem NCO-Gehalt von 23 Gew.%, hergestellt durch Umsetzung von 4,4'-Diphenylmethan-diisocyanat mit Dipropylenglykol.

100 Teile der A-Komponente und 50,5 Teile der B-Komponente — entsprechend einem Isocyanatindex von 1,05 — wurden auf 50 °C erwärmt und nach dem Reaktionsspritzguß-Verfahren auf einer Hochdruckdosieranlage vom Typ (R) Puromat 30 der Elastogran-Maschinenbau in einer auf 50 °C temperierten Aluminiumform mit den Innenabmessungen 4 × 400 × 200 mm zu Formplatten verarbeitet. Da nach 25 Entformungen keine Verklebung der Formplatten mit dem Formwerkzeug beobachtet wurde, wurde die Plattenherstellung abgebrochen.

An der bei 120 °C 1 Stunde getemperten Formplatte wurden die folgenden mechanischen Eigenschaften gemessen :

| | |
|---|---|
| Rohdichte nach DIN 53 420 | [kg/m³] 1 058 |
| Reißfestigkeit nach DIN 53 504 | [N/mm²] 31,8 |
| Reißdehnung nach DIN 53 504 | [%] 360 |
| Weiterreißfestigkeit nach Graves gemäß DIN 53 515 | [N/mm] 86,3 |
| Shore D-Härte nach DIN 53 505 | 57 |
| Biege-E-Modul nach DIN 53 457 | [N/mm²] 391 |

## Beispiel 2

A-Komponente : Mischung aus

72,9 Teilen des Polyoxypropylen-polyoxyethylen-triols nach Beispiel 1,
21,0 Teilen 2,4-Dimethyl-6-tert.butyl-phenylendiamin-1,3,
5,0 Teilen Fettsäureester II,
1,0 Teilen 1,4-Diazabicyclo-(2,2,2)-octan in Dipropylenglykol (33 gew.%ige Lösung) und
0,1 Teilen Dibutylzinndilaurat

B-Komponente : analog Beispiel 1

100 Teile der A-Komponente und 50,3 Teile der B-Komponente — entsprechend einem Isocyanatindex von 1,05 — wurden analog den Angaben von Beispiel 1 zu Formplatten verarbeitet. Da nach 20 Entformungen noch keine Verklebungen der Formplatten mit dem Formwerkzeug beobachtet wurde, wurde die Plattenherstellung abgebrochen.

An der bei 120 °C 1 Stunde lang getemperten Formplatte wurden die folgenden mechanischen Eigenschaften gemessen :

| | |
|---|---|
| Rohdichte nach DIN 53 420 | [kg/m³] 1 092 |
| Reißfestigkeit nach DIN 53 504 | [N/mm²] 27,2 |
| Reißdehnung nach DIN 53 504 | [%] 450 |
| Weiterreißfestigkeit nach Graves gemäß DIN 53 515 | [N/mm] 83,7 |
| Shore D-Härte nach DIN 53 505 | 54 |
| Biege-E-Modul nach DIN 53 457 | [N/mm²] 374 |

Beispiel 3

A-Komponente : Mischung aus

73,9 Teile des Polyoxypropylen-polyoxyethylen-triols nach Beispiel 1,
21,0 Teilen 2,4-Dimethyl-6-tert.butyl-phenylendiamin-1,3,
4,0 Teilen Fettsäureester IV,
1,0 Teilen 1,4-Diazabicyclo-(2,2,2)-octan in Dipropylenglykol (33 gew.%ige Lösung) und
0,1 Teilen Dibutylzinndilaurat

B-Komponente : analog Beispiel 1.

100 Teile der A-Komponente und 50,4 Teile der B-Komponente — entsprechend einem Isocyanatindex von 1,05 — wurden analog den Angaben von Beispiel 1 zu Formplatten verarbeitet. Da nach 22 Entformungen noch keine Verklebungen der Formplatten mit dem Formwerkzeug beobachtet wurde, wurde die Plattenherstellung abgebrochen.

An der bei 120 °C 1 Stunde lang getemperten Formplatte wurden die folgenden mechanischen Eigenschaften gemessen :

| | |
|---|---|
| Rohdichte nach DIN 53 420 | [kg/m³] 1 079 |
| Reißfestigkeit nach DIN 53 504 | [N/mm²] 25,6 |
| Reißdehnung nach DIN 53 504 | [%] 306 |
| Weiterreißfestigkeit nach Graves gemäß DIN 53 515 | [N/mm] 81,3 |
| Shore D-Härte nach DIN 53 505 | 57 |
| Biege-E-Modul nach DIN 53 457 | [N/mm²] 377 |

Vergleichsbeispiel
(ohne Zusatz eines inneren Formtrennmittels)

A-Komponente : Mischung aus

77,9 Teilen eines Polyoxypropylen-polyoxyethylen-triols nach Beispiel 1,
21,0 Teilen 2,4-Dimethyl-6-tert.butyl-phenylendiamin-1,3
1,0 Teilen 1,4-Diazabicyclo-(2,2,2)-octan in Dipropylenglykol (33 gew.%ige Lösung) und
0,1 Teilen Dibutylzinndilaurat

B-Komponente : analog Beispiel 1

100 Teile der A-Komponente und 50,7 Teile der B-Komponente — entsprechend einem Isocyanatindex von 105 — wurden analog den Angaben von Beispiel 1 zu Formplatten verarbeitet. Vor Beginn der Formplattenherstellung wurde das Formwerkzeug einmal mit einem üblichen externen Trennmittel eingesprüht. Auf diese Weise konnten 7 Formplatten in Folge hergestellt werden, danach verklebte die Formplatte mit dem Formwerkzeug.

An der bei 120 °C 1 Stunde lang getemperten Formplatte wurden die folgenden mechanischen Eigenschaften gemessen :

| | |
|---|---|
| Rohdichte nach DIN 53 420 | [kg/m³] 1 090 |
| Reißfestigkeit nach DIN 53 504 | [N/mm²] 32 |
| Reißdehnung nach DIN 53 504 | [%] 340 |
| Weiterreißfestigkeit nach Graves gemäß DIN 53 515 | [N/mm] 93,9 |
| Shore D-Härte nach DIN 53 505 | 58 |
| Biege-E-Modul nach DIN 53 457 | [N/mm²] 430 |

**Patentansprüche**

1. Verfahren zur Herstellung von zellhaltigen oder kompakten Polyurethan-Polyharnstoff-Formkörpern mit verbesserten Entformungseigenschaften durch Umsetzung von

a) organischen Polyisocyanaten,
b) höhermolekularen Verbindungen mit mindestens zwei reaktiven Wasserstoffatomen,
c) aromatischen Diaminen, deren Aminogruppen gegenüber Polyisocyanaten durch mindestens einen orthoständigen Alkylsubstituenten zu jeder Aminogruppe sterisch behindert sind und gegebenenfalls
d) weiteren Kettenverlängerungsmitteln und/oder Vernetzern in Gegenwart von
e) inneren Formtrennmitteln,
f) Katalysatoren und gegebenenfalls
g) Treibmitteln,
h) Hilfsmitteln und/oder Zusatzstoffen

als one shot-Systeme nach der Reaktionspritzgußtechnik in geschlossenen Formwerkzeugen, dadurch gekennzeichnet, daß man als innere Formtrennmittel Carbonsäureester und/oder Carbonsäureamide mit Molekulargewichten von 388 bis 1 790, Säurezahlen kleiner als 10 und Amin- und/oder Hydroxylzahlen von 0 bis 100 verwendet, die hergestellt werden durch Veresterung oder Amidierung einer Mischung aus Montansäure und mindestens einer aliphatischen Carbonsäure mit mindestens 10 Kohlenstoffatomen mit mindestens difunktionellen Alkanolaminen, Polyolen und/oder Polyaminen mit Molekulargewichten von 60 bis 400.

2. Verfahren nach Anspruch 1, dadurch gekennzeichnet, daß man als innere Formtrennmittel tertiäre Aminogruppen gebunden enthaltende Carbonsäureester und/oder Carbonsäureamide, hergestellt durch Veresterung oder Amidierung einer Mischung aus Montansäure und mindestens einer aliphatischen Carbonsäure mit mindestens 10 Kohlenstoffatomen mit tertiären Aminogruppen enthaltenden, mindestens difunktionellen Alkanolaminen und/oder Polyaminen, verwendet.

3. Verfahren nach Anspruch 1, dadurch gekennzeichnet, daß man die inneren Formtrennmittel in einer Menge von 0,1 bis 20 Gew.%, bezogen auf das Gesamtgewicht der Aufbaukomponenten (a) bis (d) verwendet.

4. Verfahren nach Anspruch 1, dadurch gekennzeichnet, daß die Mischung aus Montansäure und mindestens einer aliphatischen Carbonsäure, bezogen auf das Gesamtgewicht, 5 bis 95 Gew.% Montansäure enthält.

5. Verfahren nach Anspruch 1, dadurch gekennzeichnet, daß man als aliphatische Carbonsäuren mit mindestens 10 Kohlenstoffatomen Ölsäure und/oder Tallölfettsäure verwendet.

6. Verfahren nach Anspruch 1, dadurch gekennzeichnet, daß man als mindestens difunktionelle Alkanolamine Triethanolamin und/oder Triisopropanolamin verwendet.

7. Verfahren nach Anspruch 1, dadurch gekennzeichnet, daß man als innere Formtrennmittel tertiäre Aminogruppen gebunden enthaltende Carbonsäureester, hergestellt durch Veresterung einer Mischung aus einem Mol Montansäure, 2 Molen Tallölfettsäure und/oder Ölsäure und einem Mol Triethanolamin und/oder Triisopropanolamin verwendet.

8. Verfahren nach Anspruch 1, dadurch gekennzeichnet, daß man als höhermolekulare Verbindungen (b) Polyether-polyamine und/oder Polyole, ausgewählt aus der Gruppe der Polyether-polyole, Polyester-polyole, Polythioether-polyole, Polyesteramide, hydroxylgruppenhaltigen Polyacetale und/oder hydroxylgruppenhaltigen aliphatischen Polycarbonate mit einer Funktionalität von 2 bis 8 und Molekulargewichten von 1 000 bis 8 000 verwendet.

9. Verfahren nach Anspruch 1, dadurch gekennzeichnet, daß man als aromatische Diamine (c) primäre aromatische Diamine verwendet, deren Aminogruppen gegenüber Polyisocyanaten durch mindestens einen orthoständigen Alkylsubstituenten zu jeder Aminogruppe sterisch behindert sind.

10. Verfahren nach Anspruch 1, dadurch gekennzeichnet, daß man als aromatische Diamine Mischungen verwendet aus

c) 99,9 bis 50 Gew.% mindestens eines primären aromatischen Diamins, dessen Aminogruppen gegenüber Polyisocyanaten durch mindestens einen orthoständigen Alkylsubstituenten zu jeder Aminogruppe sterisch behindert sind und

ci) 0,1 bis 50 Gew.% mindestens eines unsubstituierten oder substituierten primären aromatischen Diamins, dessen Aminogruppen gegenüber Polyisocyanaten keine durch elektronenanziehende Substituenten und/oder sterische Hinderung verursachte verminderte Reaktivität zeigen,

wobei die Gew.% bezogen sind auf das Gesamtgewicht der Mischung (c) und (ci).

11. Innere Formtrennmittel zur Herstellung von Formkörpern nach dem Polyisocyanat-Polyadditionsverfahren in offenen oder geschlossenen Formwerkzeugen, bestehend aus tertiäre Aminogruppen gebunden enthaltenden Carbonsäureestern und/oder Carbonsäureamiden mit Molekulargewichten von 388 bis 1 790, Säurezahlen kleiner als 10 und Amin- und/oder Hydroxylzahlen von 0 bis 100, die hergestellt werden durch Veresterung oder Amidierung einer Mischung aus Montansäure und mindestens einer aliphatischen Carbonsäure mit mindestens 10 Kohlenstoffatomen mit einem Montansäuregehalt von 5 bis 95 Gew.-%, bezogen auf das Gesamtgewicht der Carbonsäuremischung, mit tertiären Aminogruppen

enthaltenden, mindestens difunktionellen Alkanolaminen und/oder Polyaminen mit Molekulargewichten von 60 bis 400.

12. Innere Formtrennmittel nach Anspruch 11, bestehend aus tertiäre Aminogruppen gebunden enthaltenden Carbonsäureestern, hergestellt durch Veresterung einer Mischung aus einem Mol Montansäure, 2 Molen Tallölfettsäure und/oder Ölsäure und einem Mol Triethanolamin und/oder Triisopropanolamin.

**Claims**

1. A process for preparing a cell-containing or compact polyurethane-polyurea molding having improved demolding properties by reacting

a) an organic polyisocyanate,
b) a higher-molecular-weight compound having at least two reactive hydrogen atoms,
c) an aromatic diamine whose amino groups are sterically hindered with respect to polyisocyanates by at least one ortho-disposed alkyl substituent relative to each amino group and optionally
d) further chain-extending agents and/or crosslinkers in the presence of
e) an inner mold release agent,
f) a catalyst and optionally
g) a blowing agent,
h) an assistant and/or additive

as a one-shot system by the reaction injection molding technique in a closed mold, which comprises using as the inner mold release agent a carboxylic ester and/or carboxamide having a molecular weight of from 388 to 1 790, an acid number less than 10 and amine and/or hydroxyl numbers of 0 to 100, which are prepared by esterifying or amidating a mixture of montanic acid and an least one aliphatic carboxylic acid of at least 10 carbon atoms with an at least difunctional alkanolamine, polyol and/or polyamine having a molecular weight of from 60 to 400.

2. A process as claimed in claim 1, wherein the inner mold release agent used is a carboxylic ester and/or a carboxamide containing tertiary amino groups in bonded form and prepared by esterifying or amidating a mixture of montanic acid and at least one aliphatic carboxylic acid of at least 10 carbon atoms with an at least difunctional alkanolamine and/or polyamine containing tertiary amino groups.

3. A process as claimed in claim 1, wherein the inner mold release agent is used in an amount of from 0.1 to 20 % by weight, based on the total weight of structural components (a) to (d).

4. A process as claimed in claim 1, wherein the mixture of montanic acid and at least one aliphatic carboxylic acid contains from 5 to 95 % by weight, based on the total, of montanic acid.

5. A process as claimed in claim 1, wherein the aliphatic carboxylic acid of at least 10 carbon atoms is oleic acid and/or tall oil fatty acid.

6. A process as claimed in claim 1, wherein the at least difunctional alkanolamine used is triethanolamine and/or triisopropanolamine.

7. A process as claimed in claim 1, wherein the inner mold release agent used is a carboxylic ester containing tertiary amino groups in bonded form and prepared by esterifying a mixture of 1 mole of montanic acid, 2 moles of tall oil fatty acid and/or oleic acid and 1 mole of triethanolamine and/or triisopropanolamine.

8. A process as claimed in claim 1, wherein the higher molecular weight compound (b) used is a polyetherpolyamine and/or polyol selected from the group consistins of polyether-polyols, polyester-polyols, polythioether-polyols, polyester-amides, hydroxyl-containing polyacetals and/or hydroxyl-containing aliphatic polycarbonates having a functionality of from 2 to 8 and molecular weights of from 1 000 to 8 000.

9. A process as claimed in claim 1, wherein the aromatic diamine (c) is a primary aromatic diamine whose amino groups are sterically hindered with respect to polyisocyanates by at least one ortho-disposed alkyl substituent relative to each amino group.

10. A process as claimed in claim 1, wherein the aromatic diamine used is a mixture of

c) from 99.9 to 50 % by weight of at least one primary aromatic diamine whose amino groups are sterically hindered with respect to polyisocyanates by at least one ortho-disposed alkyl substituent relative to each amino group, and

ci) from 0.1 to 50 % by weight of at least one unsubstituted or substituted primary aromatic diamine whose amino groups do not show any reduced reactivity with respect to polyisocyanates due to electron-withdrawing substituents and/or steric hindrance,

the %ages by weight being based on the total weight of the mixture of (c) and (ci).

11. An inner mold release agent for preparing a molding by the polyisocyanate-polyaddition process in an open or closed mold, consisting of a carboxylic ester and/or carboxamide containing the tertiary

amino groups in bonded form and having molecular weights of from 388 to 1 790, acid numbers less than 10 and amine and/or hydroxyl numbers of from 0 to 100, which is prepared by esterifying or amidating a mixture of montanic acid and at least one aliphatic carboxylic acid of at least 10 carbon atoms which has a montanic acid content of from 5 to 95 % by weight, based or the total weight of the carboxylic acid mixture, with an at least difunctional alkanolamine and/or polyamine containing tertiary amino groups and having molecular weights of from 60 to 400.

12. An inner mold release agent as claimed in claim 11, consisting of a carboxylic ester containing tertiary amino groups in bonded form and prepared by esterifying a mixture of one mole of montanic acid, 2 moles of tall oil fatty acid and/or oleic acid and one mole of triethanolamine and/or triisopropanolamine.

**Revendications**

1. Procédé de fabrication de corps moulés polyuréthane-polyurée cellulaires ou compacts à propriétés de démoulage améliorées, par réaction de

a) polyisocyanates organiques,
b) composés de poids moléculaire élevé, ayant au moins deux atomes d'hydrogène réactifs,
c) diamines aromatiques dont les groupes amino sont stériquement entravés vis-à-vis des polyisocyanates par au moins un substituant alkyle en position ortho sur chaque groupe amino et, éventuellement
d) autres agents d'allongement de chaîne et/ou de réticulation en présence de
e) agents de démoulage intérieurs
f) catalyseurs et éventuellement
g) gonflants
h) auxiliaires et/ou additifs

comme système one-shot selon la technique de moulage par injection-réaction en moules fermés, caractérisé par le fait que l'on utilise, comme agents de démoulage intérieurs, des esters d'acide carboxylique et/ou des amides d'acide carboxylique de poids moléculaires de 388 à 1 790, d'indices d'acide inférieurs à 10 et d'indices d'amine et/ou d'hydroxyle de 0 à 100, qui sont préparés par estérification ou amidation d'un mélange d'acide montanique et d'au moins un acide carboxylique aliphatique ayant au moins 10 atomes de carbone avec des alcanolamines, polyols et/ou polyamines au moins bifonctionnelles de poids moléculaires de 60 à 400.

2. Procédé selon la revendication 1, caractérisé par le fait que l'on utilise, comme agents de démoulage intérieurs, des esters d'acide carboxylique et/ou amides d'acide carboxylique contenant, liés, des groupes amino tertiaires, préparés par estérification ou amidation d'un mélange d'acide montanique et d'au moins un acide carboxylique aliphatique ayant au moins 10 atomes de carbone, avec des alcanolamines et/ou polyamines au moins bifonctionnelles, contenant des groupes amino tertiaires.

3. Procédé selon la revendication 1, caractérisé par le fait que l'on utilise les agents de démoulage intérieurs en proportions de 0,1 à 20 % en poids, rapportées au poids total des composants de structure (a) à (d).

4. Procédé selon la revendication 1, caractérisé par le fait que le mélange d'acide montanique et d'au moins un acide carboxylique aliphatique contient, rapportées au poids total, 5 à 95 % en poids d'acide montanique.

5. Procédé selon la revendication 1, caractérisé par le fait que l'on utilise, comme acides carboxyliques aliphatiques ayant moins de 10 atomes de carbone, de l'acide oléique et/ou de l'acide gras d'huile de pin (tallöl).

6. Procédé selon la revendication 1, caractérisé par le fait que l'on utilise, comme alcanolamine au moins bifonctionnelle, de la triéthanolamine et/ou triisopropanolamine.

7. Procédé selon la revendication 1, caractérisé par le fait que l'on utilise, comme agents de démoulage intérieurs, des esters d'acide carboxylique contenant, liés, des groupes amino tertiaires, préparés par estérification d'un mélange d'une mole d'acide montanique, 2 moles d'acide gras de tallöl et/ou d'acide oléique et une mole de triéthanolamine et/ou triisopropanolamine.

8. Procédé selon la revendication 1, caractérisé par le fait que l'on utilise, comme composés (b) à poids moléculaire élevé, des polyéthers-polyamines et/ou polyols choisis dans le groupe des polyéthers-polyols, polyesters-polyols, polythioéthers-polyols, polyestéramides, polyacétals à groupe hydroxyle, et/ou polycarbonates aliphatiques à groupes hydroxyle, d'une fonctionnalité de 2 à 8 et de poids moléculaires de 1 000 à 8 000.

9. Procédé selon la revendication 1, caractérisé par le fait que l'on utilise, comme diamines aromatiques (c), des diamines aromatiques primaires dont les groupes amino sont entravés stériquement vis-à-vis des polyisocyanates par au moins un substituant alkyle en position ortho sur chaque groupe amino.

10. Procédé selon la revendication 1, caractérisé par le fait que l'on utilise, comme diamines aromatiques, des mélanges de

c) 99,9 à 50 % en poids d'au moins une diamine aromatique primaire, dont les groupes amino sont entravés stériquement vis-à-vis des polyisocyanates par au moins un substituant alkyle en position ortho sur chaque groupe amino et

ci) 0,5 à 50 % en poids d'au moins une diamine aromatique primaire substituée ou non substituée, dont les groupes amino ne présentent, vis-à-vis des polyisocyanates, aucune réactivité réduite provoquée par des substituants attirant les électrons et/ou une entrave stérique,

les pourcentages en poids étant rapportés au poids total du mélange (c) et (ci).

11. Agent de démoulage intérieur pour la fabrication de corps moulés selon le procédé polyisocyanate-polyaddition en moules ouverts ou fermés, constitué d'esters d'acides carboxyliques et/ou amides d'acides carboxyliques, contenant, liés, des groupes amino tertiaires, de poids moléculaires de 388 à 1 790 ; d'indices d'acide inférieurs à 10 et d'indices d'amine et/ou d'hydroxyle de 0 à 100, qui sont préparés par estérification ou amidation d'un mélange d'acide montanique et d'au moins un acide carboxylique aliphatique ayant au moins 10 atomes de carbone, avec une teneur en acide montanique de 5 à 95 % en poids, rapportée au poids total du mélange d'acide carboxylique, avec des alcanolamines et/ou polyamines, au moins bifonctionnelles, à poids moléculaires de 60 à 400 et contenant des groupes amino tertiaires.

12. Agent de démoulage intérieur selon la revendication 11 constitué par des esters d'acide carboxylique contenant, liés, des groupes amino tertiaires, préparés par estérification d'un mélange d'une mole d'acide montanique, 2 moles d'acide gras de tallöl et/ou d'acide oléique et une mole de triéthanolamine et/ou triisopropanolamine.